# DEMANDE DE BREVET EUROPEEN

(11) **EP 1 860 345 A1**
(43) Date de publication de la demande: **28.11.2007**
(21) Numéro de dépôt: 07300993.8
(22) Date de dépôt: 26.04.2007
(51) Int. Cl.: F16H 3/12, F16H 61/04

(54) **Boîte de vitesses de véhicule automobile et procédé de changement de rapport pour une telle boîte de vitesses**

(30) Priorité: 24.05.2006 FR 0604698
(71) Demandeur: Peugeot Citroen Automobiles SA, 78943 Vélizy-Villacoublay Cedex (FR)
(72) Inventeur: Schaeffer, Eric, 92250, LA GARENNE-COLOMBES (FR)

(57) **Abrégé**

Boîte de vitesses de véhicule automobile présentant au moins un rapport de première, un ou plusieurs rapports intermédiaire et un rapport maximum, croissants dans cet ordre, la boîte comprenant: une paire de pignons (14,16) pour chaque rapport, une pluralité de moyens de synchronisation (18,32) associés au moins au rapport de première et au rapport maximum, des moyens de crabotage (34) pour chaque paire de pignons (14,16), des moyens (48) de pilotage de la boîte de vitesses aptes à commander, en cas d'ordre de passage montant à un rapport déterminé, la synchronisation d'un pignon fou (14,16) d'un rapport plus élevé jusqu'à ce que le rapport de démultiplication déterminé soit atteint.

Les moyens de synchronisation (32) associés au rapport maximum sont indépendants de tous les moyens de crabotage (34) et les moyens de crabotage (34) associés à chaque rapport de démultiplication sont indépendants des moyens de crabotage (34) associés aux autres rapports de démultiplication.

## Description

L'invention concerne en général une boîte de vitesses de véhicule automobile et un procédé de changement de rapport pour une telle boîte de vitesses.

Plus précisément, l'invention concerne, selon un premier aspect, une boîte de vitesses de véhicule automobile comprenant un arbre primaire propre à être entraîné en rotation par un moteur, un arbre secondaire propre à entraîner les roues du véhicule, et une pluralité de paires de pignons accouplant sélectivement en rotation les arbres primaire et secondaire et définissant des rapports de démultiplication entre la vitesse de rotation de l'arbre primaire et celle de l'arbre secondaire propres à chaque paire, la boîte présentant au moins un rapport de première, un ou plusieurs rapports intermédiaire et un rapport maximum, croissants dans cet ordre, chaque paire comprenant un pignon monté fou autour de l'un de l'arbre primaire ou de l'arbre secondaire et un pignon monté fixe sur l'autre de l'arbre primaire ou de l'arbre secondaire et engrenant le pignon fou, la boîte comprenant encore :
- une pluralité de moyens de synchronisation associés au moins au rapport de première et au rapport maximum, chacun apte à synchroniser sélectivement en rotation le pignon fou du rapport associé avec l'arbre autour duquel il est monté,
- pour chaque paire de pignons, des moyens de crabotage aptes à solidariser en rotation le pignon fou de ladite paire de pignon à l'arbre autour duquel il est monté,
- un organe de commande du passage d'un rapport de démultiplication à un autre,
- un capteur de mesure d'une grandeur représentative de la vitesse de rotation de l'arbre primaire,
- une entrée d'un paramètre représentatif de la vitesse de rotation de l'arbre secondaire,
- des moyens de pilotage de la boîte de vitesses renseignés par le capteur de vitesse et par l'entrée et recevant des ordres de l'organe de commande du passage de rapport, les moyens de pilotage étant aptes à commander, en cas d'ordre de passage montant à un rapport déterminé, la synchronisation d'un pignon fou d'un rapport plus élevé jusqu'à ce que le capteur indique que le rapport de démultiplication déterminé est atteint.

Les boîtes de vitesses de ce type sont connues de l'état de la technique par la demande de brevet déposée sous le numéro FR 05 02775, et présentent des temps de passage de rapport importants, de l'ordre de 250 ms. De ce fait, le conducteur et les passagers ressentent la rupture de couple moteur se produisant au changement de rapport. Par ailleurs, au moment où les arbres primaire et secondaire sont désaccouplés, le véhicule subit une décélération, et ses passagers sont légèrement projetés vers l'avant. Quand les arbres sont réaccouplés, le véhicule subit une accélération, et ses passagers sont ramenés vers l'arrière. Ce phénomène dit de "salut" est désagréable pour les passagers.

Dans ce contexte, la présente invention a pour but de proposer une boîte de vitesses présentant des temps de passage de rapport plus courts, de manière à augmenter le confort des passagers.

A cette fin, la boîte de vitesses de l'invention, du type décrit ci-dessus, est essentiellement caractérisée en ce que les moyens de synchronisation associés au rapport maximum sont indépendants de tous les moyens de crabotage et en ce que les moyens de crabotage associés à chaque rapport de démultiplication sont indépendants des moyens de crabotage associés aux autres rapports de démultiplication.

La boîte de vitesses peut également comprendre une ou plusieurs des caractéristiques ci-dessous, considérées individuellement ou selon toutes les combinaisons techniquement possibles :
- les moyens de pilotage sont aptes à commander, en cas d'ordre de passage descendant à un rapport déterminé, la synchronisation d'un pignon fou d'un rapport de démultiplication moins élevé jusqu'à ce que le capteur indique que le rapport de démultiplication déterminé est atteint, les moyens de synchronisation associés au rapport de première étant indépendants de tous les moyens de crabotage ;
- la boîte comprend seulement des moyens de synchronisation associés au rapport de première et des moyens de synchronisation associés au rapport maximum ;
- les moyens de crabotage associés à chaque rapport de démultiplication sont indépendants des moyens de crabotage associés aux autres rapports de démultiplication - au moins certains moyens de crabotage sont communs à deux rapports de démultiplication différents ; et
- les pignons fixes du rapport de première et du rapport intermédiaire de seconde sont montés sur l'arbre primaire, et les pignons fixes des autres rapports sont montés sur l'arbre secondaire.

L'invention concerne, selon un second aspect, un procédé de changement de rapport de démultiplication pour une boîte de vitesses présentant les caractéristiques ci-dessus, caractérisé en ce que le procédé comprend au moins les étapes suivantes en cas de passage montant d'un rapport relativement moins élevé à un rapport déterminé :
1/ désaccouplement des arbres primaire et secondaire par décrabotage du pignon fou dudit rapport relativement moins élevé ;
2/ déplacement des moyens de synchronisation du pignon fou d'un rapport plus élevé que ledit rapport déterminé d'une position neutre, vers ledit pignon fou du rapport plus élevé;
3/ synchronisation dudit pignon fou du rapport plus élevé que ledit rapport déterminé, jusqu'à ce que le rapport de démultiplication déterminé soit atteint;
4/ accouplement des arbres primaire et secondaire par l'intermédiaire de la paire de pignons correspondant au rapport de démultiplication déterminé ;
les étapes 1/ et 2/ étant réalisées au moins partiellement simultanément.

Le procédé peut également comprendre une ou plusieurs des caractéristiques ci-dessous considérées individuellement ou selon toutes les combinaisons techniquement possibles :
- ce procédé comprend, après l'étape 3/, une étape 3'/ au cours de laquelle les moyens de synchronisation du pignon fou sont ramenés en position neutre, les étapes 3'/ et 4/ étant réalisées au moins partiellement simultanément ;
- le procédé comprend les étapes suivantes en cas de passage descendant d'un rapport relativement plus élevé au rapport déterminé :
   1/ désaccouplement des arbres primaire et secondaire par décrabotage du pignon fou dudit rapport relativement plus élevé ;
   2/ déplacement des moyens de synchronisation du pignon fou d'un rapport moins élevé que ledit rapport déterminé, d'une position neutre vers ledit pignon fou du rapport moins élevé;
   3/ synchronisation dudit pignon fou du rapport moins élevé que ledit rapport déterminé, jusqu'à ce que le rapport de démultiplication déterminé soit atteint ;
   4/ accouplement des arbres primaire et secondaire par l'intermédiaire de la paire de pignons correspondant au rapport de démultiplication déterminé ; les étapes 1/ et 2/ étant réalisées au moins partiellement simultanément.
- le procédé comprend, après l'étape 3/, une étape 3'/ au cours de laquelle les moyens de synchronisation du pignon fou sont ramenés en position neutre, les étapes 3'/ et 4/ étant réalisées au moins partiellement simultanément.

L'invention concerne, selon un troisième aspect, un véhicule comprenant une boîte de vitesses présentant les caractéristiques ci-dessus, et un capteur de vitesse longitudinale du véhicule relié à l'entrée du paramètre représentatif de la vitesse de rotation de l'arbre secondaire de la boîte de vitesses.

D'autres caractéristiques et avantages de l'invention ressortiront de la description qui en est faite ci-dessous, à titre indicatif et nullement limitatif, en référence aux figures annexées, parmi lesquelles :

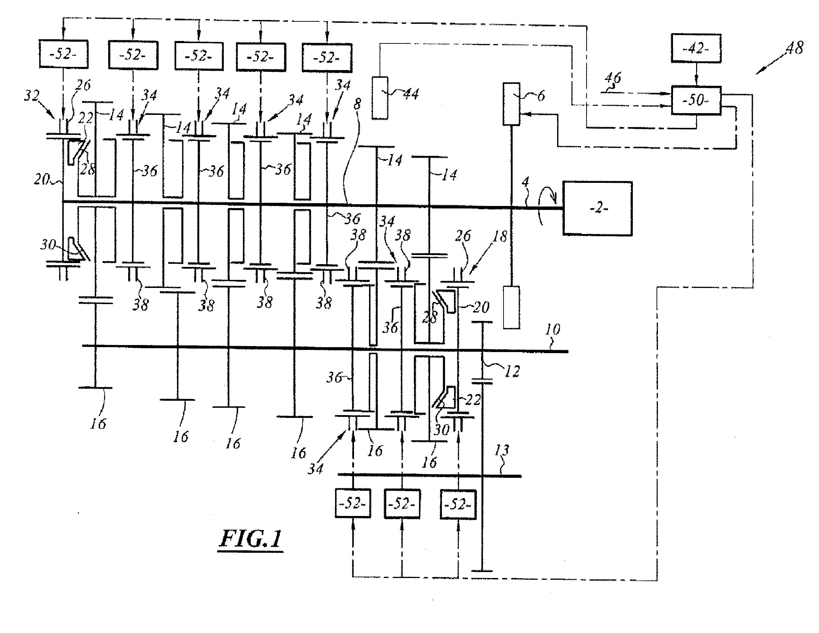

- la figure 1 est une vue schématique développée partielle, en coupe, de la boîte de vitesse de l'invention ; et

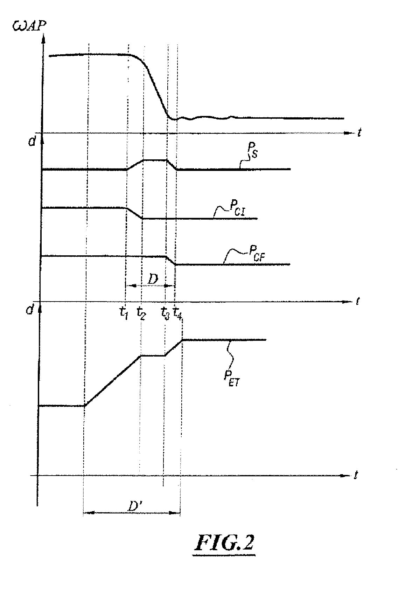

- la figure 2 est une représentation graphique montrant, lors d'un changement de rapport, l'évolution en fonction du temps de la vitesse de l'arbre primaire ω_{AP} (courbe du haut), de la position du synchroniseur du 6^{e} rapport (courbe P_{S}), de la position du crabot du rapport initial (courbe P_{Cl}), de la position du crabot du rapport final (courbe P_{CF}) pour la boîte de la figure 1, et l'évolution en fonction du temps de la position de l'actionneur d'une boîte conforme à l'état de la technique (courbe P_{ET}), dans laquelle un unique actionneur réalise les opérations de décrabotage du rapport initial, de synchronisation et de crabotage du rapport final.

La boîte de vitesses représentée sur la figure 1 est destinée à être utilisée dans un véhicule automobile comprenant un moteur 2, un arbre moteur 4 entraîné en rotation par le moteur 2, un embrayage 6 solidarisant sélectivement en rotation l'arbre moteur 4 et un arbre primaire 8 de la boîte de vitesses, et un différentiel (non représenté) entraîné en rotation par un arbre secondaire 10 de la boîte de vitesses et entraînant lui-même en rotation les roues du véhicule (également non représentées).

L'embrayage 6 est susceptible d'adopter des positions ouverte ou fermée.

En position ouverte de l'embrayage 6, l'arbre primaire 8 est libre en rotation par rapport à l'arbre moteur 4. En position fermée de l'embrayage 6, l'arbre primaire 8 est solidaire en rotation de l'arbre moteur 4. L'arbre secondaire 10 est lié en rotation en permanence au différentiel et donc aux roues.

Comme on le voit sur la figure 1, la boîte de vitesses comprend, outre les arbres primaire 8 et secondaire 10, un pignon intermédiaire 12 lié en rotation à l'arbre secondaire 10, et une pluralité de paires de pignons accouplant sélectivement en rotation les arbres primaire 8 et secondaire 10 et définissant un rapport de démultiplication entre la vitesse de rotation de l'arbre primaire 8 et celle de l'arbre secondaire 10 propre à chaque paire.

Le pignon intermédiaire 12 engrène une couronne de pont 13 qui entraîne elle-même le différentiel.

Dans l'exemple de réalisation illustré, la boîte comprend six rapports de démultiplication de marche avant différents, et comprend donc six paires de pignons. Un rapport de démultiplication est défini comme étant le rapport de la vitesse de rotation de l'arbre secondaire 10 divisé par la vitesse de rotation de l'arbre primaire 8 quand la paire de pignons correspondant au rapport accouple en rotation les arbres primaire 8 et secondaire 10.

On appelle rapport de première le rapport de démultiplication le plus bas, rapport de seconde le rapport de démultiplication immédiatement supérieur, et ainsi de suite jusqu'au rapport de sixième, qui est le rapport de démultiplication maximum, c'est-à-dire le plus élevé.

Chaque paire de pignons comprend un pignon menant 14 solidaire en rotation de l'arbre primaire 8 ou monté fou autour de cet arbre primaire 8, et un pignon mené 16 solidaire en rotation de l'arbre secondaire 10 ou monté fou autour de l'arbre secondaire 10. Les pignons menant 14 et mené 16 d'une même paire engrènent en permanence l'un avec l'autre.

Les pignons menants 14 sont alignés le long de l'arbre primaire 8, le pignon menant 14 du rapport de première, c'est-à-dire du rapport de démultiplication le plus faible, étant situé le plus à droite sur la figure 1, le pignon menant 14 du rapport de seconde, c'est-à-dire du rapport de démultiplication immédiatement supérieur au rapport de première, étant situé à la gauche du pignon menant 14 du rapport de première, et ainsi de suite. Le pignon menant 14 du rapport de sixième, c'est-à-dire du rapport de démultiplication le plus élevé, est situé à l'extrême gauche de l'arbre primaire 8 sur la figure 1.

Les pignons menants 14 des rapports de première et de seconde sont solidaires en rotation de l'arbre primaire 8. Les pignons menants 14 des quatre autres rapports sont montés fous autour de l'arbre primaire 8.

De manière symétrique, les pignons menés 16 sont alignés le long de l'arbre secondaire 10. Le pignon mené 16 du rapport de première est situé à droite de l'arbre secondaire 10, le pignon mené 16 du rapport de seconde est situé immédiatement à gauche du pignon mené 16 du rapport de première, et ainsi de suite. Le pignon mené 16 du rapport de sixième est situé à l'extrême gauche de l'arbre secondaire 10 sur la figure 1. Les pignons menés 16 des rapports de première et de seconde sont montés fous autour de l'arbre secondaire 10, les pignons menés 16 des quatre autres rapports étant solidaires en rotation de l'arbre secondaire 10.

Les pignons menants 14 sont de tailles croissantes de la droite vers la gauche de l'arbre primaire 8, le pignon menant 14 du rapport de première étant de diamètre inférieur au pignon menant 14 du rapport de seconde, le pignon menant 14 du rapport de seconde étant de taille inférieure au pignon menant 14 du rapport de troisième et ainsi de suite.

Inversement, les pignons menés 16 sont de tailles décroissantes de la droite vers la gauche de l'arbre secondaire 10. Ainsi, le pignon mené 16 du rapport de première est de taille supérieure au pignon mené 16 du rapport de seconde, le pignon mené 16 du rapport de seconde est de taille supérieure au pignon mené 16 du rapport de troisième et ainsi de suite.

La boîte de vitesses comprend un premier dispositif de synchronisation 18 apte à synchroniser sélectivement en rotation avec l'arbre secondaire 10 le pignon mené 16 du rapport de première.

Comme on le voit sur la figure 1, le dispositif de synchronisation 18 est interposé entre le pignon mené 16 du rapport de première et le pignon intermédiaire 12.

Le dispositif de synchronisation 18 comprend un moyeu de synchronisation 20 solidaire en rotation de l'arbre secondaire 10, une bague de synchronisation 22 interposée axialement entre le moyeu de synchronisation 20 et le pignon mené 16 de première, et un manchon 26 susceptible d'être déplacé axialement le long de l'arbre secondaire 10, à partir d'une position neutre vers le pignon mené 16 du rapport de première. En position neutre, le pignon mené 16 du rapport de première est libre en rotation par rapport à l'arbre secondaire 10. Quand le manchon 26 est déplacé vers le pignon mené 16, il adopte une position de synchronisation dans laquelle le manchon 26 sollicite la bague 22 vers le pignon mené 16, de façon à ce qu'une portée de friction 28 de la bague 22 frotte contre une zone de friction complémentaire 30 du pignon mené 16. Le frottement entre la bague de synchronisation 22 et le pignon mené 16 a pour effet de ralentir ou d'accélérer, selon les cas, la vitesse de rotation du pignon mené 16.

La boîte de vitesses comprend également un second dispositif de synchronisation 32 apte à synchroniser sélectivement en rotation le pignon menant 14 du rapport de sixième avec l'arbre primaire 8.

Le second dispositif de synchronisation 32 est situé à gauche du pignon menant 14 du sixième rapport le long de l'arbre primaire 8. Il est du même type que le premier dispositif de synchronisation 18 et ne sera donc pas décrit en détail ici.

La boîte de vitesses comprend encore, pour chaque paire de pignons 14 et 16, un dispositif de crabotage 34, apte à sélectivement solidariser en rotation le pignon fou 14 ou 16 de ladite paire de pignons à l'arbre 8 ou 10 autour duquel il est monté. Les dispositifs de crabotage 34 sont tous identiques.

Chacun d'eux comprend un moyeu 36 solidaire de l'arbre primaire 8 ou de l'arbre secondaire 10, et un manchon de crabotage 38 solidaire en rotation du moyeu 36 et mobile axialement le long de l'arbre primaire vers le pignon fou du rapport correspondant. Le manchon 38 est susceptible d'adopter une position neutre dans laquelle le pignon fou n'est pas solidaire en rotation de l'arbre.

Quand le manchon 38 est déplacé, à partir de sa position neutre vers le pignon fou du rapport à engager, il adopte une position de crabotage dans laquelle le manchon 38 solidarise en rotation ledit pignon fou et l'arbre primaire 8 ou l'arbre secondaire 10. Le déplacement du manchon 38 jusqu'à sa position de crabotage n'est possible que quand la vitesse de rotation du pignon fou est égale à celle de l'arbre.

Les dispositifs de crabotage 34 associés aux différents rapports sont tous indépendants les uns des autres. En d'autres termes, le manchon 38 de chaque dispositif de crabotage est susceptible d'être déplacé par un actionneur propre à ce dispositif de crabotage. L'actionneur associé à chaque dispositif de crabotage peut être activé indépendamment des actionneurs des autres dispositifs de crabotage.

De la même manière, les premier et second dispositifs de synchronisation 18 et 32 sont indépendants l'un de l'autre, et sont chacun indépendants des dispositifs de crabotage 34. Le manchon 26 de chacun des dispositifs de synchronisation est susceptible d'être déplacé par un actionneur qui lui est propre. Il peut être déplacé indépendamment de l'autre dispositif de synchronisation, et indépendamment des dispositifs de crabotage 34.

La boîte de vitesses est de type robotisé et comprend un organe de commande 42 du passage d'un rapport de démultiplication à un autre, susceptible d'être actionné par le conducteur du véhicule automobile, un capteur 44 de mesure de la vitesse de rotation du pignon menant 14 du rapport de seconde, une entrée 46 d'un paramètre représentatif de la vitesse de rotation de l'arbre secondaire 10, et des moyens 48 de pilotage de la boîte de vitesses.

La vitesse de rotation du pignon menant 14 du rapport de seconde est égale à la vitesse de rotation de l'arbre primaire 8 du fait que ce pignon 14 est solidaire en rotation de l'arbre primaire 8.

Le paramètre représentatif de la vitesse de rotation de l'arbre secondaire 10 est la vitesse longitudinale du véhicule, la vitesse de rotation de l'arbre secondaire 10 étant directement liée à cette vitesse longitudinale, du fait que l'arbre secondaire 10 est lié en rotation en permanence aux roues du véhicule. Le véhicule comporte un capteur de vitesse longitudinale (non représenté) qui est relié à l'entrée 46.

Les moyens de pilotage 48 comprennent un calculateur 50 et huit actionneurs 52. Deux actionneurs 52 sont dédiés chacun à un dispositif de synchronisation 18 ou 32. Les six autres actionneurs 52 sont dédiés chacun à un dispositif de crabotage 34.

Le calculateur 50 reçoit les ordres de l'organe de commande 42, et est renseigné par le capteur de vitesse 44 et par l'entrée du paramètre représentatif 46. Le calculateur 50 pilote les différents actionneurs 52 de manière totalement indépendante les uns des autres. Les actionneurs 52 sont aptes à déplacer les manchons de crabotage des dispositifs de synchronisation 18 et 32 et des dispositifs de crabotage 34, dans un sens ou dans l'autre le long des arbres primaire et secondaire 8 et 10.

Le calculateur 50 est en outre apte à commander l'ouverture et la fermeture de l'embrayage 6 quand il reçoit de l'organe de commande 42 un ordre de passage de rapport.

On va maintenant décrire le fonctionnement de la boîte de vitesses, en cas de passage montant, par exemple du rapport de quatrième au rapport de cinquième.

Quand le conducteur du véhicule actionne l'organe de commande 42 en demandant le passage du rapport de quatrième au rapport de cinquième, le calculateur 50 commande d'abord l'ouverture de l'embrayage 6, puis le désaccouplement des arbres primaire 8 et secondaire 10 en décrabotant le pignon fou du rapport de quatrième.

Il actionne, pour cela, l'actionneur 52 correspondant au dispositif de crabotage 34 du rapport de quatrième.

Le calculateur 50 commande également l'actionnement du second dispositif de synchronisation 32, par déplacement du manchon 26 vers le pignon menant 14 du rapport de sixième, à partir de la position neutre vers la position de synchronisation. Dans une première phase correspondant à l'intervalle de temps entre les instants t1 et t2 de la figure 2, le manchon 26 se déplace vers le pignon 14 jusqu'à sa position de synchronisation, mais la portée 28 du manchon ne frotte pas contre la portée 30 du pignon. Dans une seconde phase, correspondant à l'intervalle de temps entre les instants t2 et t3 de la figure 2, le manchon 26 reste sensiblement à sa position de synchronisation et l'actionneur 52 sollicite la portée 28 de la bague 22 contre la portée 30 du pignon par l'intermédiaire du manchon 26, de façon à créer une friction entre la bague 22 et le pignon menant 14 du rapport de sixième. Les déplacements axiaux d du second dispositif de synchronisation 32 sont représentés pour la courbe P_{S} de la figure 2.

Cette friction a pour effet de ralentir la vitesse de rotation de l'arbre primaire 8. En effet, la vitesse de rotation du pignon menant 14 du rapport de sixième est sensiblement constante, puisque ce pignon est lié en rotation en permanence à l'arbre secondaire 10, lui-même lié en rotation en permanence aux roues du véhicule. Dans le court laps de temps nécessaire pour effectuer le changement de rapport, la vitesse du véhicule est sensiblement constante. Par ailleurs, quand le rapport de quatrième est engagé, l'arbre primaire 8 tourne plus vite que le pignon menant 14 du rapport de sixième. La friction créée par l'actionnement du second dispositif de synchronisation 32 a donc nécessairement pour effet de ralentir la vitesse de rotation de l'arbre primaire 8.

Le calculateur 50 scrute en permanence les vitesses de rotation des arbres primaire 8 et secondaire 10. Quand le rapport de la vitesse de rotation de l'arbre secondaire 10 sur la vitesse de rotation de l'arbre primaire 8 atteint la valeur correspondant au rapport de cinquième, du fait du ralentissement de l'arbre primaire 8, le calculateur 50 commande l'arrêt de la synchronisation du pignon menant 14 du rapport de sixième avec l'arbre primaire 8. L'actionneur 52 correspondant ramène alors le manchon 26 dans sa position neutre, ce qui correspond à l'intervalle de temps s'étendant de t3 à t4 sur la figure 1. Le ralentissement de l'arbre primaire 8 cesse.

Le calculateur 50 commande par ailleurs l'engagement du rapport de démultiplication de cinquième, par crabotage du pignon menant 14 du rapport de cinquième avec l'arbre primaire 8. Pour ce faire, il actionne l'actionneur 52 du dispositif de crabotage 34 associé au rapport de cinquième, de façon à déplacer le manchon 38 à sa position de crabotage du pignon menant 14 du rapport de cinquième. Le crabotage de ce pignon menant 14 avec l'arbre primaire 8 peut être réalisé du fait que les vitesses de rotation du pignon et de l'arbre sont synchronisées.

Le calculateur 50 commande enfin la fermeture de l'embrayage 6, ce qui a pour effet d'accoupler l'arbre primaire 8 et l'arbre moteur 4.

De manière à raccourcir la durée du changement de rapport, le décrabotage du pignon fou du rapport de quatrième (courbe P_{Cl} de la figure 2) est réalisé en temps masqué, pendant la première phase du déplacement du manchon 26 du dispositif de synchronisation (phase d'approche du manchon entre t1 et t2). De même, le crabotage du pignon fou du rapport de cinquième (courbe P_{CF} de la figure 2) est effectué en temps masqué, pendant le retour du manchon 26 du dispositif de synchronisation en position neutre (intervalle de temps entre t3 et t4).

Les autres passages montants sont effectués selon la procédure décrite ci-dessus.

Dans le cas d'un passage de rapport descendant, par exemple du rapport de sixième au rapport de cinquième, le calculateur 50 commande d'abord l'ouverture de l'embrayage 6. II commande ensuite le désaccouplement des arbres primaire 8 et secondaire 10 en décrabotant le pignon fou du rapport de sixième. A cet effet, le calculateur 50 actionne l'actionneur 52 correspondant, de façon à faire passer le manchon 38 du dispositif de crabotage associé au sixième rapport dans sa position neutre.

Le calculateur 50 commande également l'actionnement du premier dispositif de synchronisation 18, de façon à déplacer, dans une première phase, le manchon 26 de ce premier dispositif de synchronisation 18 de sa position neutre à sa position de synchronisation du pignon fou du rapport de première avec l'arbre secondaire 10, puis, dans une deuxième phase, à créer une friction en sollicitant la bague de synchronisation 22 du dispositif de synchronisation contre la surface de friction complémentaire 30 ménagée sur le pignon.

Cette friction a pour effet d'accélérer progressivement la vitesse de rotation de l'arbre primaire. En effet, quand le rapport de sixième est engagé, le pignon mené 16 du rapport de première tourne moins vite que l'arbre secondaire 10. Le pignon menant 14 du rapport de première tourne à la même vitesse que le pignon menant 14 du rapport de sixième, mais le pignon mené 16 du rapport de première tourne moins vite que le pignon mené 16 du rapport de sixième, puisque le rapport de démultiplication de première est inférieur au rapport de démultiplication de sixième.

La friction créée par l'actionnement du dispositif de synchronisation 18 a donc pour effet d'accélérer le pignon mené 16 du rapport de première, et donc d'accélérer la vitesse de rotation de l'arbre primaire 8.

Les moyens de calcul 50 scrutent en permanence les vitesses de rotation des arbres primaire 8 et secondaire 10 et, quand le rapport de la vitesse de l'arbre secondaire 10 sur la vitesse de l'arbre primaire 8 a atteint le niveau correspondant au rapport de démultiplication moins élevé recherché, du fait de l'accélération de la vitesse de rotation de l'arbre primaire 8, le calculateur 50 commande que l'actionnement du premier dispositif de synchronisation soit arrêté. L'actionneur 52 correspondant ramène le manchon 26 du dispositif à sa position neutre.

Le calculateur 50 commande également le crabotage du pignon menant du rapport de cinquième, de façon à accoupler de nouveau les arbres primaire 8 et secondaire 10.

Enfin, le calculateur 50 commande la fermeture de l'embrayage 6, de façon à lier en rotation l'arbre moteur 4 et l'arbre primaire 8 de la boîte de vitesses.

Comme pour les rapports montants, le décrabotage du pignon fou du rapport de sixième est réalisé en temps masqué pendant la première phase du déplacement du manchon 26 du dispositif de synchronisation (phase d'approche, entre t1 et t2 sur la figure 2). De même, le crabotage du pignon fou de cinquième est réalisé en temps masqué pendant le retour du manchon 26 du dispositif de synchronisation 18 en position neutre (entre t3 et t4 sur la figure 2).

Une procédure similaire est utilisée pour les autres passages descendants.

La boîte de vitesses décrite ci-dessus peut présenter de multiples variantes.

Elle peut comprendre des moyens de synchronisation supplémentaires, en plus des moyens de synchronisation associés au rapport de première et au rapport maximum de la boîte de vitesses.

La boîte de vitesses peut comprendre moins de six paires de pignons de marche avant, par exemple quatre ou cinq paires de pignons de marche avant, ou plus de six paires de pignons de marche avant, par exemple sept.

Les pignons fous et les pignons fixes peuvent être répartis sur les arbres primaire et secondaires d'une autre façon que dans l'exemple de réalisation de la figure. Par exemple, les pignons fous des rapports de troisième, de quatrième, de cinquième et de sixième peuvent être montés autour de l'arbre secondaire, et les pignons fous des rapports de première et de seconde autour de l'arbre primaire. Toute autre répartition est envisageable.

Les dispositifs de crabotage peuvent être communs à deux rapports de démultiplication (un seul actionneur déplaçant le manchon du dispositif de crabotage soit vers le pignon fou d'un rapport soit vers le pignon fou de l'autre rapport).

On comprend bien que la boîte de vitesses décrite ci-dessus présente de multiples avantages.

Du fait que le dispositif de synchronisation du rapport maximum est indépendant de tous les dispositifs de crabotage, il est possible d'effectuer, en cas de passage montant, le décrabotage du rapport initial en temps masqué par rapport à la synchronisation. La durée du changement de rapport est raccourcie. Pour la même raison, le crabotage du rapport final est effectué également en temps masqué par rapport à la synchronisation, ce qui contribue également à raccourcir la durée du changement de rapport montant.

Du fait que le dispositif de synchronisation du rapport de première est indépendant de tous les dispositifs de crabotage, le décrabotage du rapport initial et le crabotage du rapport final peuvent également être effectués en temps masqué par rapport à la synchronisation en cas de passage descendant. Pour cette raison, la durée des passages descendants peut également être raccourcie.

Il est possible de ramener ainsi la durée D des changements de rapport à moins de 100 ms, ce qui permet de rendre, pour les passagers, la rupture de couple pratiquement insensible.

Dans l'état de la technique, un même actionneur effectue le décrabotage du rapport initial, la synchronisation et le crabotage du rapport final, au moins pour le passage du rapport de cinquième au rapport de sixième. Aucune opération ne peut être effectuée en temps masqué, comme le montre la courbe P_{ET} de la figure 2, de telle sorte que la durée D' du changement de rapport est de 250 ms environ.

L'encombrement axial, c'est-à-dire parallèlement à l'arbre, et le coût de la boîte de vitesses sont réduits du fait qu'elle ne comporte que deux synchroniseurs.

On peut souligner également que cette boîte de vitesses ne comprend qu'un seul capteur, ce qui est favorable d'un point de vue coût et d'un point de vue fiabilité.

## Revendications

1. Boîte de vitesses de véhicule automobile comprenant un arbre primaire (8) propre à être entraîné en rotation par un moteur (2), un arbre secondaire (10) propre à entraîner les roues du véhicule, et une pluralité de paires de pignons (14, 16) accouplant sélectivement en rotation les arbres primaire et secondaire (8, 10) et définissant des rapports de démultiplication entre la vitesse de rotation de l'arbre primaire (8) et celle de l'arbre secondaire (10) propres à chaque paire, la boîte présentant au moins un rapport de première, un ou plusieurs rapports intermédiaire et un rapport maximum, croissants dans cet ordre, chaque paire comprenant un pignon (14, 16) monté fou autour de l'un de l'arbre primaire (8) ou de l'arbre secondaire (10) et un pignon (14, 16) monté fixe sur l'autre de l'arbre primaire (8) ou de l'arbre secondaire (10) et engrenant le pignon fou, la boîte comprenant encore :
- une pluralité de moyens de synchronisation (18, 32) associés au moins au rapport de première et au rapport maximum, chacun apte à synchroniser sélectivement en rotation le pignon fou (14, 16) du rapport associé avec l'arbre (8, 10) autour duquel il est monté,
- pour chaque paire de pignons (14, 16), des moyens de crabotage (34) aptes à solidariser en rotation le pignon fou (14, 16) de ladite paire de pignon à l'arbre (8, 10) autour duquel il est monté,
- un organe (42) de commande du passage d'un rapport de démultiplication à un autre,
- un capteur de mesure (44) d'une grandeur représentative de la vitesse de rotation de l'arbre primaire (8),
- une entrée (46) d'un paramètre représentatif de la vitesse de rotation de l'arbre secondaire (10),
- des moyens (48) de pilotage de la boîte de vitesses renseignés par le capteur de vitesse (44) et par l'entrée (46) et recevant des ordres de l'organe (42) de commande du passage de rapport, les moyens (48) de pilotage étant aptes à commander, en cas d'ordre de passage montant à un rapport déterminé, la synchronisation d'un pignon fou (14, 16) d'un rapport plus élevé jusqu'à ce que le capteur (44) indique que le rapport de démultiplication déterminé est atteint,
**caractérisée en ce que** les moyens de synchronisation (32) associés au rapport maximum sont indépendants de tous les moyens de crabotage (34) et **en ce que** les moyens de crabotage (34) associés à chaque rapport de démultiplication sont indépendants des moyens de crabotage (34) associés aux autres rapports de démultiplication.

2. Boîte selon la revendication 1, **caractérisée en ce que** les moyens (48) de pilotage sont aptes à commander, en cas d'ordre de passage descendant à un rapport déterminé, la synchronisation d'un pignon fou (14, 16) d'un rapport de démultiplication moins élevé jusqu'à ce que le capteur (44) indique que le rapport de démultiplication déterminé est atteint, les moyens de synchronisation (18) associés au rapport de première étant indépendants de tous les moyens de crabotage (34).

3. Boîte selon la revendication 1 ou 2, **caractérisée en ce qu'**elle comprend seulement des moyens de synchronisation (18) associés au rapport de première et des moyens de synchronisation (32) associés au rapport maximum.

4. Boîte selon l'une quelconque des revendications 1 à 3, **caractérisée en ce qu'**au moins certains moyens de crabotage (34) sont communs à deux rapports de démultiplication différents.

5. Boîte selon l'une quelconque des revendications 1 à 4, **caractérisée en ce que** les pignons fixes (14) du rapport de première et du rapport intermédiaire de seconde sont montés sur l'arbre primaire (8), et les pignons fixes (16) des autres rapports sont montés sur l'arbre secondaire (10).

6. Procédé de changement de rapport de démultiplication pour une boîte selon l'une quelconque des revendications 1 à 5, **caractérisé en ce qu'**il comprend au moins les étapes suivantes en cas de passage montant d'un rapport relativement moins élevé à un rapport déterminé :
1 / désaccouplement des arbres primaire (8) et secondaire (10) par décrabotage du pignon fou (14, 16) dudit rapport relativement moins élevé;
2/ déplacement des moyens de synchronisation (26) du pignon fou (14, 16) d'un rapport plus élevé que ledit rapport déterminé d'une position neutre, vers ledit pignon fou (14, 16) du rapport plus élevé ;
3/ synchronisation dudit pignon fou (14, 16) du rapport plus élevé que ledit rapport déterminé, jusqu'à ce que le rapport de démultiplication déterminé soit atteint;
4/ accouplement des arbres primaire (8) et secondaire (10) par l'intermédiaire de la paire de pignons (14, 16) correspondant au rapport de démultiplication déterminé; les étapes 1/ et 2/ étant réalisées au moins partiellement simultanément.

7. Procédé selon la revendication 6, **caractérisé en ce qu'**il comprend, après l'étape 3/, une étape 3'/ au cours de laquelle les moyens de synchronisation (26) du pignon fou (14, 16) sont ramenés en position neutre, les étapes 3'/ et 4/ étant réalisées au moins partiellement simultanément.

8. Procédé selon la revendication 7, **caractérisé en ce qu'**il comprend les étapes suivantes en cas de passage descendant d'un rapport relativement plus élevé au rapport déterminé :
1/ désaccouplement des arbres primaire (8) et secondaire (10) par décrabotage du pignon fou (14, 16) dudit rapport relativement plus élevé;
2/ déplacement des moyens de synchronisation (26) du pignon fou (14, 16) d'un rapport moins élevé que ledit rapport déterminé, d'une position neutre vers ledit pignon fou (14, 16) du rapport moins élevé ;
3/ synchronisation dudit pignon fou (14, 16) du rapport moins élevé que ledit rapport déterminé, jusqu'à ce que le rapport de démultiplication déterminé soit atteint ;
4/ accouplement des arbres primaire (8) et secondaire (10) par l'intermédiaire de la paire de pignons (14, 16) correspondant au rapport de démultiplication déterminé ; les étapes 1/ et 2/ étant réalisées au moins partiellement simultanément.

9. Procédé selon la revendication 8, **caractérisé en ce qu'**il comprend, après l'étape 3/, une étape 3'/ au cours de laquelle les moyens de synchronisation (26) du pignon fou (14, 16) sont ramenés en position neutre, les étapes 3'/ et 4/ étant réalisées au moins partiellement simultanément.

10. Véhicule automobile comprenant une boîte de vitesses selon l'une quelconque des revendications 1 à 5, et un capteur de vitesse longitudinale du véhicule relié à l'entrée (46) du paramètre représentatif de la vitesse de rotation de l'arbre secondaire (10) de la boîte de vitesses.
